Europäisches Patentamt

European Patent Office

Office européen des brevets

(19)

(11) Numéro de publication: **0 165 160**
**B1**

(12) **FASCICULE DE BREVET EUROPEEN**

(45) Date de publication du fascicule du brevet: **19.09.90**

(51) Int. Cl.⁵: **A 01 K 61/00**

(21) Numéro de dépôt: **85401046.9**

(22) Date de dépôt: **28.05.85**

(54) Installation et procédé d'aquaculture en mer.

(30) Priorité: **28.05.84 FR 8408319**

(43) Date de publication de la demande:
**18.12.85 Bulletin 85/51**

(45) Mention de la délivrance du brevet:
**19.09.90 Bulletin 90/38**

(84) Etats contractants désignés:
**BE DE GB IT NL SE**

(56) Documents cités:
**EP-A-0 080 414**
**GB-A-1 590 781**
**GB-A-2 078 473**

(73) Titulaire: **Bourdon, André Eugène Vincent**
**65, rue Gambetta**
**F-76200 Dieppe (FR)**

(72) Inventeur: **Bourdon, André**
**65, rue Gambetta**
**F-76200 Dieppe (FR)**

(74) Mandataire: **Arnaud, Jean Pierre Alfred**
**Cabinet Arnaud 94 rue Saint-Lazare**
**F-75009 Paris (FR)**

Courier Press, Leamington Spa, England.

## Description

La présente invention concerne les installations d'aquaculture en présence de courants.

On connaît déjà des installations d'aquaculture placées dans des sites protégés tels que des atolls ou des fonds de fjords. Cependant, un inconvénient de ces installations est leur confinement car l'eau n'est renouvelée que partiellement et subit différents processus de pollution. Ainsi, les poissins provoquent une pollution locale du volume qui les contient. Cette situation favorise l'extension des maladies si bien que la densité des poissons doit être limitée. En outre, le confinement de l'eau réduit son oxygénation et la densité de poissons qui peuvent ainsi être élevés est donc aussi limitée.

On a essayé de remédier à ces inconvénients par l'aquaculture en haute mer. On a déjà utilisé des cages flottantes ancrées au fond de la mer. Le fonctionnement de celles-ci est satisfaisant dans des sites protégés tels que des baies ou des anses. Cependant, elles ne peuvent pas résister aux conditions régnant en haute mer. On ne les utilise donc qu'avec des densités modérées de poissons, compte tenu de la pollution propre aux poissons eux-mêmes.

On a aussi suggéré de munir des plates-formes analogues à celles qui sont utilisées pour le forage en mer, de cages d'élevage qui leur sont raccordées. Ces installations donnent satisfaction lorsque les conditions de courant sont bien adaptées, c'est-à-dire lorsque les courants sont suffisamment forts pour assurer un renouvellement de l'eau et une dispersion des déjections ou, lorsque les courants sont tout à fait inexistants et permettent aux déjections de tomber directement au fond de la mer. On a cependant constaté que, dans les mers dont les courants ont une intensité moyenne, des problèmes de pollution, notamment de pollution interne pouvaient se poser.

Le brevet européen EP—0 080 414 décrit une installation d'aquaculture comportant une structure centrale et plusieurs modules flottants submersibles, reliées par des canalisations qui plongent dans l'eau. Les modules peuvent se déplacer en direction verticale par rapport à la structure centrale près de laquelle ils sont retenus par des amarres. Les différents modules sont toujours proches de la structure centrale et les uns des autres.

L'invention concerne un procédé d'aquaculture en mer libre, et une installation destinée à sa mise en oeuvre.

Plus précisément, l'invention concerne un procédé d'aquaculture en mer libre, du type qui comprend la disposition d'au moins deux modules flottants submersibles en mer libre ayant des courants dans sa couche superficielle, et la disposition depoissons à élever dans chacun des modules, les poissons créant une pollution qui est entraînée par les courants et affecte ainsi une région constituant une zone d'action de ce module; selon l'invention, tous les modules sont disposés à distance les uns des autres en direction perpendiculaire aux courants moyens de manière que les zones d'action des différents modules ne se recouvrent pratiquement pas.

Elle concerne aussi une installation destinée à la mise en oeuvre de ce procédé et comprenant au moins deux modules flottants submersibles et une structure centrale, chaque module étant décalé, par rapport à chacun des autres modules de l'installation et en direction perpendiculaire à la direction moyenne des courants dans la couche superficielle de la mer, d'une distance suffisante pour que les zones d'action de tous les modules de l'installation ne se recouvrent pratiquement pas, chaque module flottant étant relié, par des canalisations immergées, à une structure centrale comportant des installations communes aux différentes modules.

Dans le présent mémoire, l'expression "zone d'action" désigne la région de la mer qui est affectée par la pollution due aux poissons élevés dans les modules. Ainsi, ces zones d'action ont une grande longueur parallèlement à la direction moyenne des courants et une certaine étendue transversalement à cette direction moyenne.

Par exemple, lorsque deux modules sont placés côte à côte, la distance qui les sépare, en direction perpendiculaire à la direction moyenne des courants, est au moins égale à la somme des demi-largeurs ds zones d'actions des deux modules. Par exemple, lorsque les modules ont une dimension minimale de 20 mètres dans toutes les directions parallèles à la surface de la mer, une distance de l'ordre de 100 mètres et au moins égale à 40 mètres est avantageuse.

Chaque module est avantageusement constitué d'une ossature rigide destinée à flotter et dont la dimension minimale est de 20 mètres dans toutes les directions parallèles à la surface de la mer, portant des cages d'élevage qui en sont solidaires, des dispositifs assurant l'ancrage de l'ossature.

Dans un exemple d'installation, plusieurs modules, par exemple six, sont disposés suivant une ligne sensiblement perpendiculaire à la direction moyenne des courants, et une structure centrale est associée à l'ensemble de l'installation. La structure centrale est reliée aux différents modules par des canalisations souples immergées, destinées au transfert de la nourriture des poissons, à la transmission d'énergie nécessaire au fonctionnement de divers dispositifs placés sur les modules, etc.

D'autres caractéristiques et avantages de l'invention ressortiront mieux de la description qui va suivre, faite en référence aux dessins annexés sur lesquels:

la figure 1 est une perspective schématique représentant une partie d'une installation comprenant une structure centrale et plusieurs modules dont deux seulement sont représentés;

la figure 2 est une élévation d'un module d'élevage de l'installation représentée sur la figure 1; et

la figure 3 est une vue en plan du module de la figure 2.

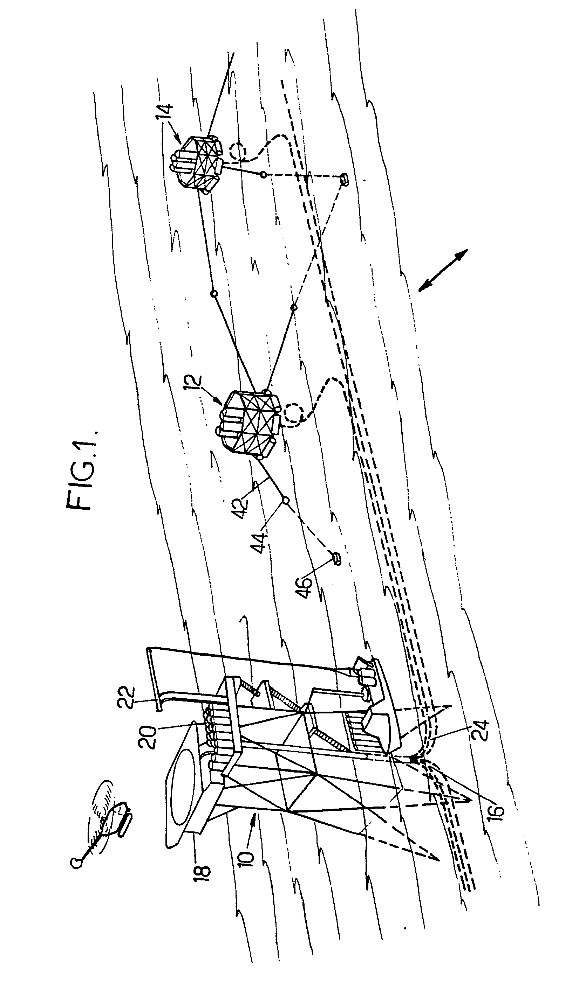

La figure 1 représente une partie d'une installation d'aquaculture selon l'invention. L'installation comporte une structure centrale 10 et plusieurs modules d'élevage dont deux sont repérés par les références 12 et 14.

La structure centrale comporte un ensemble fixe reposant au fond de la mer et fixé à des pieux battus au fond. La structure est représentée sous forme d'une colonne 16 formée par des poutrelles et ayant une grande rigidité. Cette colonne est fabriquée selon les techniques bien connues des spécialistes des plates-formes pétrolières. La colonne porte un pont 18 qui supporte lui-même toutes les installations 20 nécessaires à l'installation. Le pont 18 est supporté à une hauteur suffisamment grande au-dessus du niveau des plus hautes mers pour que même en cas de forte tempête, la plate-forme ne soit pas affectée par les vagues.

L'une des faces de la colonne 16 comprend des défenses permettant l'accostage d'un navire assurant le ravitaillement.

Les différents dispositifs portés par le pont comprennent des récipients de quelques mètres cubes destinés au stockage des aliments des poissons, sous forme de granulés. Ces aliments peuvent être de différents types, par exemple à humidifier avant utilisation. Une réserve d'eau douce, une réserve de combustible et un réservoir d'air comprimé sont aussi placés sur le pont.

Une petite centrale comprenant des groupes électrogènes permet l'alimentation des différents équipements de la structure centrale et des modules qui doivent recevoir du courant électrique. En outre, l'installation comporte une station de pompage destinée à transmettre tous les fluides aux différents modules. Par exemple, les aliments reçus par la structure centrale, à partir d'un navire déchargé à l'aide de la grue 22, sont préparés dans la structure centrale puis transmis par canalisation telle que 24, vers les différents modules, en présence d'un véhicule fluide qui peut être de l'eau ou de l'air.

On ne décrit pas plus en détail la structure centrale étant donné que les diverses fonctions qu'elle remplit et sa construction sont déjà connues, séparément.

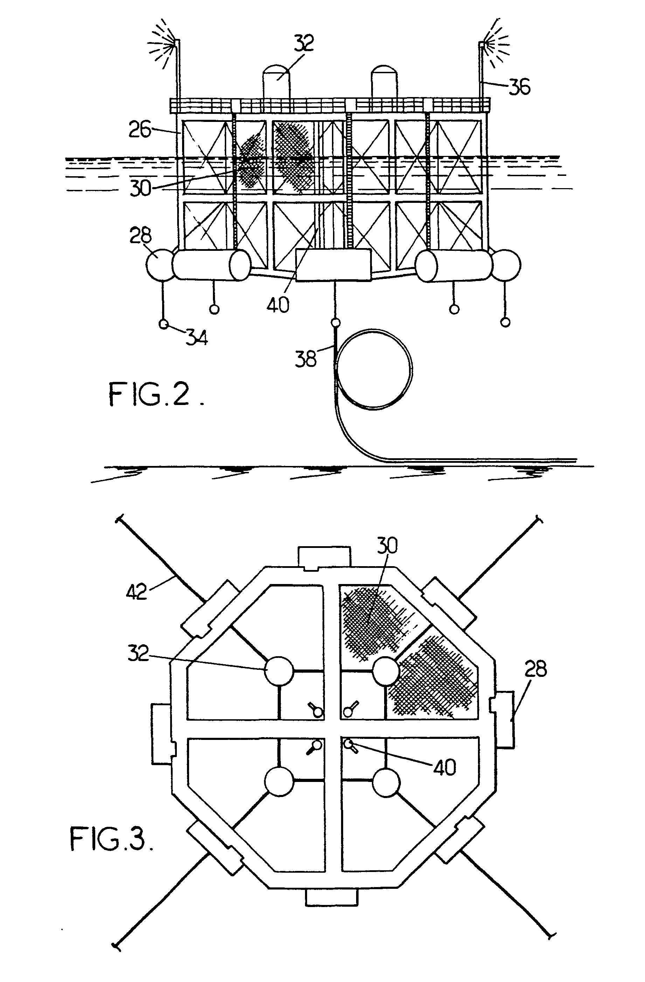

Les figures 2 et 3 représentent plus en détail un exemple de module d'élevage. Ce module comporte une ossature rigide 26 dont la plus petite dimension, en vue en plan telle que représentée sur la figure 3, est au moins égale à 20 m. Ces dimensions permettent à la structure de résister aux mers les plus sévères. La partie inférieure de la structure comporte des réservoirs 28 qui sont normalement remplis d'air lorsque la structure flotte à la surface mais qui peuvent être remplis d'eau lorsque le module doit être immergé, comme décrit dans la suite du présent mémoire.

Des treillis 30 délimitant des cages d'élevage à l'intérieur de l'ossature. Ces cages sont alimentées par l'intermédiaire de distributeurs 32 placés au-dessus de chaque cage et permettant une bonne répartition des aliments dans tout le volume de chaque cage.

La référence 34 désigne des masses suspendues à diverses hauteurs au-dessous de la structure et qui sont destinées à empêcher le choc de l'ossature contre le fond de la mer. En effet, ces masses,dès qu'elles reposent au fond de la mer, réduisent la force d'immersion exercée sur l'ossature et empêchent ainsi des chocs qui pourraient être nuisibles.

Chaque module comporte en outre un système de balisage 36 et il est alimenté par une ou plusieurs canalisations immergées 38 qui sont souples et qui sont normalement enfouies au fond de la mer, dans une tranchée. Des caméras de télévision 40 qui peuvent être immergées permettent la surveillance de la dimension des poissons et, de façon plus générale, des diverses conditions dans les cages.

Il faut ainsi noter que la totalité des modules d'élevage peut être immergée à quelques mètres ou quelques dizaines de mètres au-dessous de la surface de la mer. En conséquence, tout l'appareillage doit pouvoir supporter cette immersion. Comme l'indique la figure 1, chaque module est retenu par des lignes d'ancrage 42 reliées, par l'intermédiaire de dispositifs anti-pilonnement 44, à des corps morts 46.

Les modules représentés ont une forme ramassée leur donnant une grande résistance mécanique. Ils sont disposés sur une ligne sensiblement perpendiculaire à la direction moyenne des courants. Cette disposition des différents modules permet une évacuation des déjections des poissons par les courants sans interférence d'un module sur l'autre. Les modules sont très accessibles, par bateau, et ils comportent, à cet effet, toutes les défenses et dispositifs d'accostage nécessaires, ainsi que les échelles et passerelles représentées sur la figure 2, permettant un accès commode.

L'utilisation de corps morts communs à deux modules évite tout risque de collision entre les modules. Ceux-ci se comportent indépendamment en présence de houle, de courants, de vagues et de vents.

La liaison entre la structure centrale et les modules est assurée par des canalisations immergées repérées par la référence 24 sur la figure 1. Elles peuvent reposer sur le fond mais sont de préférence placées dans une tranchée. Elles comportent avantageusement des tuyauteries et des câbles regroupés à l'intérieur d'une gaine ayant par exemple un diamètre de 120 mm, la gaine assurant le retenue et la protection. La canalisation formée est semi-rigide et elle contient par exemple quatre tuyauteries de transfert d'aliments, quatre câbles de transmission des informations des caméras de télévision, un câble d'alimentation électrique et un câble d'alimentation en air comprimé.

Le transfert des aliments peut être réalisé par exemple en présence d'eau de mer qui constitué le véhicule. L'arrivée des aliments sous forme d'un courant d'eau à une certaine pression permet un fonctionnement automatique des distributeurs 32 des différents modules.

On considère maintenant plus précisément l'exploitations de l'installation décrite précédemment. Les différentes cages reçoivent des juvéniles provenant de piscicultures, transportés dans des cuves qui sont vidées dans les différentes cages. Le transfert entre les cuves et les cages peut être réalisé directement par gravité ou à l'aide d'un pompe de reprise d'une type connu.

Les aliments sont distribués par exemple deux fois par jour, à partir d'un ou plusieurs types d'aliments. La préparation est réalisée dans le module central qui comporte des installations de pesage et de dosage, avec éventuellement hydration des granulés. Les aliments sont préparés temporairement avant transmission à la cage considérée. La préparation est réalisée en fonction de la taille des poissons de la cage particulière, du taux de transformation des aliments, des conditions climatiques, de la densité des poissons, etc., tous ces paramètres étant pris en compte par un ordinateur placé sur la structure centrale. Cette préparation peut être aussi effectuée en fonction de mesures réalisées et portant notamment sur la nature des courants et des vents, la température de la l'eau et sa turbidité, la concentration en oxygène dissous et la salinité de l'eau, son pH, la présence de matières polluantes éventuelles, telles que les hydrocarbures, etc.

Lorsque du poisson doit être récupéré dans les cages, l'opération est avantageusement réalisée par aspiration. Dans ce cas, le bateau de service accoste le module considéré et introduit une canalisation souple qui se raccorde au fond de la cage considérée. Chaque cage comporte avantageusement un plafond mobile formé d'un treillis qui est descendu lors du pompage ufin que les poissons soient proches de l'aspiration.

Les modules flottent normalement à la surface de l'eau. Cependant, certaines conditions peuvent nécessiter leur immersion. Par exemple, lorsque la mer devient extrêmement mauvaise, il peut être avantageux d'éloigner les poissons de la surface de la mer et d'immerger les cages, par exemple à une dizaine de mètres au-dessous de la surface. A cet effet, les réservoirs 28 sont utilisés comme ballasts. Ceux-ci peuvent être remplis à une vitesse plus ou moins grande de manière que chaque modules puisse être immergé très rapidement en cas d'urgence et moins rapidement dans le cas contraire. A cet effet, des électrovannes permettent l'entrée d'eau dans les ballasts 28 et la sortie d'air qu'ils contiennent afin que la vitesse d'immersion soit de l'ordre de 0,5 à 1 mètre par minute normalement. En cas d'urgence, cette vitesse peut atteindre 5 mètres par minute. Le choc contre le fond de la mer est évité par les masses suspendues 34 (figure 2).

Bien qu'on ne l'air pas indiqué précédemment, l'installation comporte les dispositifs nécessaires de sécurité, tels que le balisage réglementaire et une protection par surveillance radar, permettant une immersion automatique des modules en cas de danger, par exemple d'arrivée d'un bateau susceptible de voler une partie des poissons.

Ainsi, on a décrit une installation dans laquelle la structure centrale est utilisée simplement pour l'execution des différentes opérations nécessaires au fonctionnement sans que du personnel réside dans l'installation, la commande étant assurée à distance par une infra-structure terrestre. Cette infrastructure est destinée à assurer la manutention des marchandises nécessaires au fonctionnement de l'installation, avec stockage éventuel, et elle assure l'acheminement des fournitures jusqu'à la structure centrale.

Bien qu'on ait décrit une installation relativement proche de la terre et dont le module central est directement fixé au fond de la mer, ces caractéristiques ne sont qu'éventuelles. En effet, lorsque les fonds sont importants, la structure central peut elle-même être ancrée et peut flotter. D'autre part, indépendamment de la nature de la structure centrale, l'installation peut être autonome, c'est-à-dire que toutes les fonctions sont assurées à partir de la structure centrale qui doit alors permettre l'hébergement de personnel. La seule caractéristique essentielle selon l'invention est que les zones d'actions des différents modules, c'est-à-dire les régions susceptibles d'être polluées par les déjections provenant d'un module, ne se recouvrent pas latéralement. Cette caractéristique est obtenue par espacement suffisant des modules, transversalement à la direction des courants moyens dans la couche superficielle de la mer, c'est-à-dire la couche supérieure de quelques dizaines de mètres d'épaisseur.

**Revendications**

1. Procédé d'aquaculture en mer libre, du type qui comprend:

—la disposition d'au moins deux modules flottants submersibles (12, 14) en mer libre ayant dzs courants dans sa couche superficielle, et

—la disposition de poissons à élever dans chacun des modules (12, 14), les poissons créant une pollution qui est entraînée par les courants et affecte ainsi une région constituant une zone d'action de ce module, caractérisé en ce qu'il comprend:

—la disposition de tous les modules à distance les uns des autres en direction perpendiculaire aux courants moyens de manière que les zones d'action des différents modules ne se recouvrent pratiquement pas.

2. Installation d'aquaculture en mer libre, destinée à la mise en oeuvre d'un procédé d'aquaculture en mer libre qui comprend:

—la disposition d'au moins deux modules flottants submersibles (12, 14) en mer libre ayant des courants dans sa couche superficielle,

—la disposition de poissons à élever dans chacun des modules (12, 14), les poissons créant une pollution qui est entraînée par les courants et affecte ainsi une région constituant une zone d'action de ce module, et

—la disposition de tous les modules à distance les uns des autres en direction perpendiculaire aux courants moyens de manière que les zones d'action des différents modules ne se recouvrent pratiquement pas,

l'installation comportant au moins deux modules flottants submersibles (12, 14) et une structure centrale comportant des installations communes aux différents modules, caractérisée en ce que chaque module (12) est décalé, par rapport à chacun des autres modules (14) de l'installation et en direction perpendiculaire à la direction moyenne des courants dans la couche superficielle de la mer, d'une distance suffisante pour que les zones d'action de tous les modules (12, 14) de l'installation ne se recouvrent pratiquement pas, chaque module flottant étant relié, par des canalisations immergées (24), à la structure centrale.

3. Installation selon la revendication 2, caractérisée en ce que chaque module (12, 14) comporte une ossature rigide (26) destinée à flotter et ayant une dimension minimale de 20 m dans toutes les directions parallèles à la surface de la mer, des cages d'élevage (30) solidaires de l'ossature (26), et des dispositifs d'ancrage (42, 44, 46) de l'ossature.

4. Installation selon la revendication 3, caractérisée en ce que la distance de décalage des modules est au moins égale à 40 m environ.

5. Installation selon l'une quelconque des revendications 2 à 4, caractérisée en ce que la structure centrale (10) est télécommandée à partir d'une infrastructure terrestre.

6. Installation selon l'une quelconque des revendications 2 à 4, caractérisée en ce que la structure centrale (10) est autonome.

7. Installation selon l'une quelconque des revendications 2 à 6, caractérisée en ce que les canalisations immergées placées entre la structure centrale (10) et chaque module (12, 14) sont destinées au transport de fluide et d'énergie.

**Patentansprüche**

1. Verfahren zur Wassertierzucht auf See,

—unter Verwendung von wenigstens zwei Modulen (12, 14), die in einem Seegebiet unter Wasser schwimmen, das Strömungen in seiner oberflächennahen Schicht aufweist,

—wobei in jedem der Module (12, 14) Zuchtfische vorgesehen werden, die eine Pollution verursachen, die von den Strömungen mitgenommen wird und auf diese Weise einen Bereich erzeugt, der den Wirkungsbereich des Moduls bestimmt, dadurch gekennzeichnet, daß

—alle Module mit Abstand zueinander und senkrecht zu den Strömungen derart angeordnet werden, daß sich die Wirkungsbereiche der einzelnen Module im wesentlichen nicht überdecken.

2. Einrichtung zur Wassertierzucht auf See zur Durchführung eines Verfahrens zur Wassertierzucht auf See,

—unter Verwendung von wenigstens zwei Modulen (12, 14), die in einem Seegebiet unter Wasser schwimmen, das Strömungen in seiner oberflächennahen Schicht aufweist,

—wobei in jedem der Module (12, 14) Zuchtfische vorgesehen werden, die eine Pollution verursachen, die von den Strömungen mitgenommen wird und auf diese Weise einen Bereich erzeugt, der den Wirkungsbereich des Moduls bestimmt, wobei

—alle Module mit Abstand zueinander und senkrecht zu den Strömungen derart angeordnet werden, daß sich die Wirkungsbereiche der einzelnen Module im wesentichen nicht überdecken,

—wobei die Einrichtung zur Wassertierzucht wenigstens zwei unter Wasser schwimmende Module (12, 14) sowie eine Zentralstruktur enthält, die für die einzelnen Module gemeinsame Installationen aufweist,

dadurch gekennzeichnet, daß jedes Modul (12) in bezug auf die anderen Module (14) der Einrichtung und senkrecht zur mittleren Richtung der Strömungen in der oberflächennahen Schicht der See mit einem ausreichenden Abstand versetzt ist, so daß sich die Wirkungsbereiche aller Module (12, 14) der Einrichtung im wesentlichen nicht überdecken, wobei jeder schwimmende Modul mit der Zentralstruktur über Kanäle (24) verbunden ist, die unter Wasser liegen.

3. Einrichtung nach Anspruch 2, dadurch gekennzeichnet, daß jedes Modul (12, 14) ein schwimmendes, starres Gestell (26) enthält, das in allen Richtungen parallel zur Oberfläche der See eine Mindestabmessung von 20 m aufweist, ferner mit dem Gestell (26) verbundene Zuchtkäfige (30) sowie Vorrichtungen (42, 44, 46) zur Verankerung des Gestells.

4. Einrichtung nach Anspruch 3, dadurch gekennzeichnet, daß die Module um einen Abstand von wenigstens ungefähr 40 m gegeneinander versetzt sind.

5. Vorrichtung nach einem der Ansprüche 2 bis 4, dadurch gekennzeichnet, daß die Zentralstruktur (10) von einer terrestrischen Infrastruktur ferngesteuert wird.

6. Einrichtung nach einem der Ansprüche 2 bis 4, dadurch gekennzeichnet, daß die Zentralstruktur (10) autonom ausgebildet ist.

7. Vorrichtung nach einem der Ansprüche 2 bis 6, dadurch gekennzeichnet, daß die unter Wasser angeordneten Kanäle zwischen der Zentralstruktur (10) und den einzelnen Modulen (12, 14) zum Fluid- und Energie-Transport bestimmt sind.

**Claims**

1. Method of aquaculture in open sea, of the type which includes:

—arranging at least two sinkable floating modules (12, 14) in an open sea having currents in surface layers, and

—placing fish life to be bred in each module (12, 14), fish life creating pollution which is carried away by said currents and affects a region constituting a zone of action of said module, characterized in that it includes:

—arranging all modules spaced apart from each other in a direction perpendicular to the mean currents a sufficient distance that the zones of action of different modules are substantially free from overlap with each other.

2. Installation for aquaculture in open sea, for operating a method of aquaculture in open sea, of the type which includes:

—arranging at least two sinkable floating modules (12, 14) in an open sea having currents in surface layers,

—placing fish life to be bred in each module (12, 14), fish life creating pollution which is carried away by said currents and affects a region constituting a zone of action of said module, and

—arranging all modules spaced apart from each other in a direction perpendicular to the mean currents a sufficient distance that the zones of action of different modules are substantially free from overlap with each other,

said installation including at least two sinkable floating modules (12, 14) and a central structure including installations common to the different modules, characterized in that each module (12) is spaced apart from each other module (14) of the installation, in a direction perpendicular to the mean direction of said currents in surface layers of open sea, a sufficient distance that the zones of action of all modules (12, 14) of said installation are substantially free from overlap with each other, each floating module being connected to said central structure by immersed pipes (24).

3. Installation according to claim 2, characterized in that each module (12, 14) includes a rigid floatable framework (26) and having a minimum dimension of 20 m in each direction parallel to the sea surface, breeding cages (30) connected to said framework (26) and framework anchoring means (42, 44, 46).

4. Installation according to claim 3, characterized in that the spacing of modules is at least equal to about 40 m.

5. Installation according to any one of claims 2 to 4, characterized in that said central structure (10) is controlled from a remote land infrastructure.

6. Installation according to any one of claims 2 to 4, characterized in that said central structure (10) is self-contained.

7. Installation according to any one of claims 2 to 6, characterized in that said immersed pipes disposed between said central structure (10) and each module (12, 14) are for carrying fluid and power.

FIG.1.

EP 0 165 160 B1

FIG.2.

FIG.3.

2